Europäisches Patentamt

European Patent Office

Office européen des brevets

(19)

(11) Publication number: **0 394 947**

**A2**

(12) # EUROPEAN PATENT APPLICATION

(21) Application number: **90107718.0**

(51) Int. Cl.5: **B01D 53/04**

(22) Date of filing: **24.04.90**

(30) Priority: **24.04.89 JP 103743/89**

(43) Date of publication of application:
**31.10.90 Bulletin 90/44**

(84) Designated Contracting States:
**AT BE CH DE DK ES FR GB GR IT LI LU NL SE**

(71) Applicant: **SAIBU GAS CO.,LTD.**
**17-1, Chiyo 1-chome, Hakata-ku**
**Fukuoka-shi, Fukuoka-ken(JP)**

Applicant: **MITSUBISHI PETROCHEMICAL**
**ENGINEERING CO., LTD.**
**5-4, Nihonbashi Bakuro-cho 1-chome**
**Chuo-ku Tokyo(JP)**

(72) Inventor: **Kanamaru, Toshihisa, c/o Saibu Gas**
**Co., Ltd.**
**17-1, Chiyo 1-chome, Hakata-ku**
**Fukuoka-shi, Fukuoka-ken(JP)**
Inventor: **Urano, Shoji, c/o Saibu Gas Co., Ltd.**

**17-1, Chiyo 1-chome, Hakata-ku**
**Fukuoka-shi, Fukuoka-ken(JP)**
Inventor: **Kinoshita, Natsuo, c/o Saibu Gas**
**Co., Ltd.**
**17-1, Chiyo 1-chome, Hakata-ku**
**Fukuoka-shi, Fukuoka-ken(JP)**
Inventor: **Ohta, Kei, c/o Saibu Gas Co., Ltd.**
**17-1, Chiyo 1-chome, Hakata-ku**
**Fukuoka-shi, Fukuoka-ken(JP)**
Inventor: **Kawasaki, Shunji c/o Saibu Gas Co.,**
**Ltd.**
**17-1, Chiyo 1-chome, Hakata-ku**
**Fukuoka-shi, Fukuoka-ken(JP)**
Inventor: **Nishino, Chikashi**
**22-64, Kotobuki 2-chome**
**Abiko-shi, Chiba-ken(JP)**

(74) Representative: **Füchsle, Klaus, Dipl.-Ing. et al**
**Hoffmann . Eitle & Partner Patentanwälte**
**Arabellastrasse 4**
**D-8000 München 81(DE)**

(54) **Apparatus for removing carbon dioxide gas and moisture from methane-rich gas mixture.**

(57) This invention relates to the improvement of the so-called PSA method, and more particularly to an apparatus for removing inert gases such as $CO_2$ gas, moisture and the like, and recovering active gases such as $H_2$, $CH_4$ and the like as useful fuel gases for city gas with the utmost effciency, which are commonly produced during the intermediate process of city gas production on SNG basis in using the PSA method. The present inventive system comprises four adsorption column units (A)(B)(C)(D), each of which is used in sequence cyclically under the rotation including an adsorption process, a super-adsorption process with a rinsing step, a desorption process with a series of depressurization steps by suction, and a pressurization process by means of a carbon type adsorbent filled within the columns. The recovered gases obtained in the desorbed gases are recycled into a crude gas feeding pipe line (a), as these still contain a combustible component such as $H_2$, $CH_4$ and the like which require further refinement repeatedly without any gas pressure fluctuation because of the employment of a water-sealed gas holder (12) positioned between a desorbed gas pipe line (g) and a recovered gas pipe line (f).

FIG.1

# APPARATUS FOR REMOVING CARBON DIOXIDE GAS AND MOISTURE FROM METHANE-RICH GAS MIXTURE

## BACKGROUND OF THE INVENTION

### 1. Field of the Invention

The present invention relates to a gas refining apparatus for removing carbon dioxide gas and moisture from methane-rich gas mixture, more particularly for removing the carbon dioxide gas and moisture which are known as noncombustible components contained within a fuel gases such as producer gases which are produced by using the so-called Pressure Swing Adsorption method during the process of city gas production, further particularly the present invention relates to the improvement of the pressure swing adsorption system.

### 2. Description of the Prior Art

Conventionally, various apparatuses and systems have been devised heretofore to remove and refine the carbon dioxide gas and moisture from the producer gases by utilizing the pressure swing adsorption-(PSA) system. In the prior art, Japanese patent provisional application No.Sho 58-159830 and the like are known as the prior art.

In the conventional system utilizing the PSA method, when the conventional system is in attempt to built-in into the on-line system of the city gas production, which is known to put the conventional SPA system between a gas producer in upstream and a caloric regulation device in downstream, the conventional system is required to correspond with the continuous running conditions of the gas production as a central key system between both streams. In this adaptability between them, however, it is also known that the system is not always successful to overcome the elemental fluctuations such as the fluctuation of gas flow rate, the fluctuation of gas pressure and their caloric fluctuation throughout the total system on line, therefore, these difficulties are deemed as a definite disadvantage involved with the conventional typed PSA system in the art.

In addition, it is notoriously known that the conventional PSA system produces a lot of exhaust gases-(the so-called a rest-gas) during its operation due to perform a cleaning and a purge for enhancing the purity of product gases in which still contains a considerable rate of combustible components usable for a fuel gases, therefore, it is not only difficult in the waste treatment of exhaust gases to the outside in view of the air pollution but also in the loss of effective components (combustible components) in view of the energy conservation, thus it is concluded that the conventional type PSA system has neither a technical adaptability of stabilizing the fluctuations of gas pressure, gas flow rate and calorie throughout the total system nor the energy conservability from the loss of combustible component including the air pollutional problem in the waste treatment of the rest-gas.

## SUMMARY OF THE INVENTION

The present invention is not only directed to provide an improved PSA system as a continuous system capable of removing the carbon dioxide gas and moisture from a methane-rich gas mixture sent from the upstream in manner of being free from the fluctuations of gas flow rate, gas pressure and its calorie by positioning at an intermediate position as a PSA system between a gas producer in upstream and a caloric regulation device in downstream, but also to provide an improved PSA system capable of recovering a combustible components with an improved recovery efficiency of the combustible component as much as possible from the so-called rest-gas produced in the process of city gas production .

## OBJECTS AND ADVANTAGES OF THE INVENTION

Accordingly, it is a general object of the invention to provide an improved PSA system consisting of four units of adsorption column to be used cyclically in the rotation with each column to perform sequentially an adsorption process including the adsorption step, a super-adsorption process including the super-adsorption step, a desorption process consisting of a serial steps of a pressure uniformalization, a self-depressurization, a depressurization by suction and a desorption by suction, and a pressurization process including a primary pressurization step, a secondary pressurization step and a hold-on step.

It is a more specific object of the invention to provide an improved PSA system characterized by providing a desorbed gas pipe line connected from a column which performs the desorption process through a desorbed gas suction pump, a recovered gas pipe line branched of from the desorbed gas pipe line, the recovered gas pipe line further provided to arrange a water-sealed gas holder, a recovered gas compressors and a recovered gas temperature control device on the same line, the recovered gas pipe line still provided to connect with a column which is ready to perform the super-adorption process upon the completion of the adsorption process in one process before, and an apparatus provided to connect by pipe lines with the column which has been performed the super-adsorption process, a recycle gas pipe line, a crude gas feeding pipe line and a column which will perform the adsorption process, wherein the apparatus can recover a combustible components contained within the desorbed gases, whereby the apparatus can enhance the efficiency of removing the carbon dioxide gas and moisture as well as the efficiency of recovering the combustible component from the refined gas.

It is another object of the invention to provide a pressure uniformalizing lower pipe line provided to connect a column which performs the absorption process with another column which performs the pressurizing processing at each bottom portion together, as well as a pressure uniformalizing upper pipe line connecting the both columns in the above at their upper portions.

It is still another object of the present invention to provide a refined gas pipe line provided to connect the upper portion of a column which performs the desorption process with a refined gas surge tank, a seconday pressurizing pipe line provided to connect the refined gas surge tank with the upper portion of a column which performs the pressurization process for charging the partial amount of the refined gas into the upper portion of the column thereof, and a constant gas flow rate regulating valve provided on the secondary pressurizing pipe line for performing the seconday pressurization step by regulating the flow rate of secondary pressurizing gases constantly.

It is a further object of the invention to provide a water-sealed gas holder having an uniformalizing device therein to uniformalize a gases components and their pressures, further to uniformalize the pressure fluctuation occurred between the suction pressure and discharging pressing of the recycle gas compressor, which is arrange on the recovered gas pine line.

It is a still further object of the invention to provide a displacement gas pipe line to deliver the partial amount of the refined gas into the water-sealed gas holder from the refined gas surge tank, a constant gas flow rate regulating valve provided on the displacement gas pipe line, whereby the recovered gas pipe line is rinsed by the partial amount of the refined gas as a displacement gas in the same gaseous flow rate which the flow rate of the secondary pressurizing gas.

It is another object of the invention to provide a recovered gas temperature control device so as to put the control device between the both refined gas pipe lines for controlling the temperature of gases to be fed into a column which performs the super-adsorption process in order to be advantageous for the desorption process of desorbing the components adsorbed within the adsorbent with the carbon dioxide gas, methane and the like.

It is further object of the invention to provide an adequate adsorbent selected from the group consisting of a carbone type adsorbent and the like.

According to the inventive composition of the present invention, which is an apparatus for removing carbon dioxide gas and moisture from a methane-rich gas mixture, once recovers a gases mixture (it is referred to as "recovered gas" hereafter) into a water-sealed gas holder in which including carbon dioxide gas and a combustible component which are delivered from the column in charge of the desorption process and in the early stage of the desorption process, wherein futher feed the gases mixture held in the gas holder into another column which has been finished the adsorption process just before cycle and now is ready to perform the super-adsorption process after finishing of the treatment to rectify the gases flows therein, to uniformalize the gases pressures therein, to rise the gases temperatures of those gases recovered once in the water-sealed gas holder, and in the super-adsorption performing column, the carbon dioxide gas is further re-adsorbed by the super-adsorption process and the combustible component contained within the recovered gas is separated and recovered through the super-adsorption process, wherein the processed gases are further recycled into the crude gas feeding pipe line.

In addition, it can make possible to shift a high purity combustible component remained in the upper portion of column which performed the super-adsorption process into the other column which is ready to perform the pressurization process, and also, at the same time, to shift the combustible component remained in the lower portion of the above super-adsorption column into the pressurization column while regulating the delivering gas flow rate.

In addition, it can make possible to prepare a next cycle by displacing the recovered gas contained within the recovered gas pipe line for the refined gas during the last stage of the super-adsorption process.

In addition, the desorbed gas component and its pressure of the above recovered gas which are in state of fluctuation in the desorption process, which are uniformalized by the water-sealed gas holder and its uniformalizing device provided therein, and further the gas pressure difference between the suction pressure and discharging pressure of the recovered gas compressor is also made constant.

In addition, the gas temperature of the recovered gas for feeding the column which is under operation of the super-adsorption process is controlled by the recovered gas temperature control device for being advantageous the desorption conditions of the components which are absorbed in $CO_2$ gas and methane.

In addition, it can use the partial amount of the refine gas for the displacement gas for the pressurization gas to rise the pressure in the column and for rinsing the whole pipe line without giving any fluctuation of pressure and gas flow rate in the downsteram.

## BRIEF DESCRIPTION OF THE DRAWINGS

Fig.1 is a schematic block diagram for showing the whole structure of an improved type PSA system to remove carbon dioxide gas and moisture from methane-rich mixture gases in which provided by the present invention,

Fig.2 is a simplified flow-sheet for showing the operational principle of the present invention,

Fig.3 is a graphical representation for showing the gas pressure fluctuations within an adsorption column in each process and step when the improved type PSA system of the present invention is carried out,

Fig.4 is a block diagram for showing the each relationship between the process of gas treatment and each column in charge of the process.

## DESCRIPTION OF THE PREFERRED EMBODIMENT

Referring now in detail to one preferred embodiment of the present invention based on the drawings as follows:

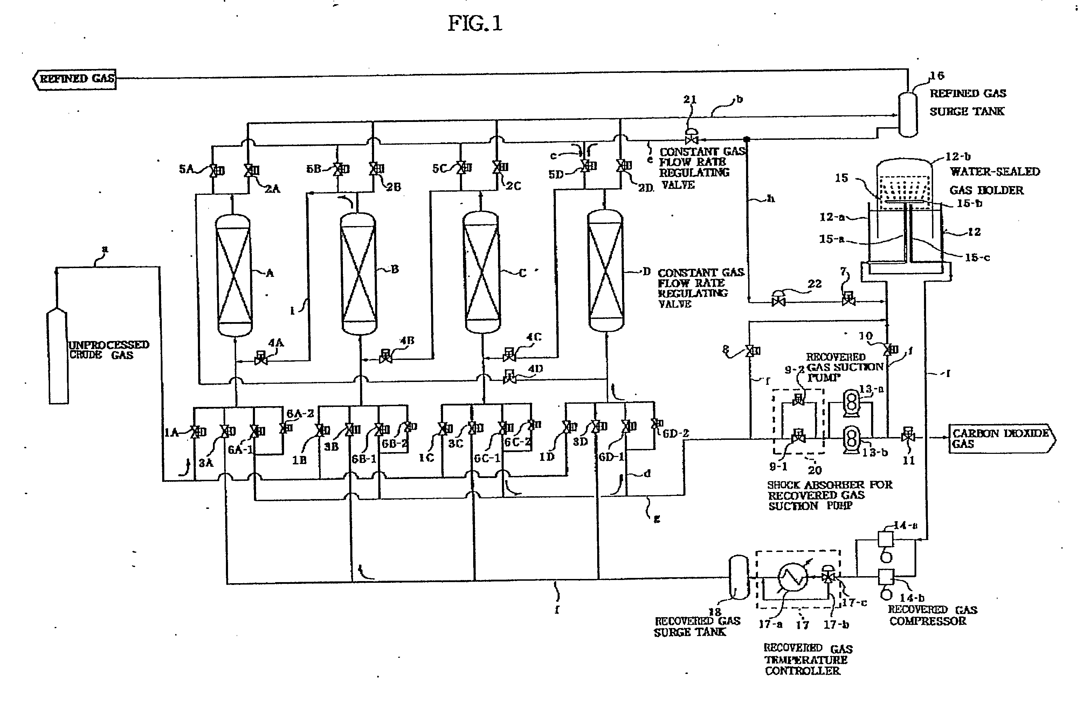

In Fig.1, this improved type PSA system mainly comprises the four units of adsorption column(A)(B)(C)-(D), adsorbed gas suction pumps(13-a)(13-b) and recovered gas compressor(14-a)(14-b) and the absorption column consists of a leak-tight structural pressure vessel each other. Each column contains a predetermined amount of adsorbent within the body portion to leave spaces in the upper and lower portions thereof respectively and then a methane-rich gas mixture, which is in state of a wet gas mixture(unprocessed crude gas) containing a rich-combustible components such as $CH_4$ and $H_2$ and also incombustible components such as $CO_2$ and moisture in which is fed from such as a gas producer used in city gas production continuously with a constant pressure and flow rate, is further fed into an initial column and then the methane-rich gas mixture introduced in the initial column is processed by adsorbing $CO_2$ and moisture-($H_2O$) only through the adsorbent wherein the purities of the combustible components of methane-rich gas mixture are enhanced by the adsorption of incombustible components through the adsorbent layers and then delivered toward another column from the initial column as a refined gases. With respect to the specification of adsorbent, it employs a carbon molecular sieves with approximately 3 Å (angstrom) of pore diameter in average as an adsorbent, wherein this adsorbent is provided within each column respectively.

In Fig.1, these four units of the adsorption column(A)(B)(C)(D) are connected each other by an unprocessed crude gas feeding pipe line(a) through each branch pipe line at their bottom portions respectively to feed the unprocessed crude gases into them, as well as these four columns are also connected by a refined gas discharging pipe line(b) through each branch pipe line at their upper portions respectively to discharge the refined gases without the contents of carbon dioxide gas and moisture after the adsorption process of them by the adsorbent. From this arrangement of the crude gas feeding pipe line, these two pip lines(a)(b) become to be arranged in parallel so as to put the four columns beween them. The each branch pipe line provided at the bottom portion of each column has a change-over valve to regulate the gas feeding rate of crude gas from the gas producer in the upstream respectivley, which is arranged between the bottom of each column and the main crude gas feeding pipe line(a) and the respective change-over valve is identified in Fig.1 as valve(1A) for column(A), valve(1B) for column(B), valve(1C) for column(C) and valve(1D) for column(D).

With respect to the refined gas pipe line(b), this pipe line(b) extends to the calorific regulating device in the downstream finally through a refined gas pump(15) and a refined gas surge tank(16) arranged between their columns(A)(B) (C)(D) through each branch pipe line and the downstream final device, the each branch pipe line from the each column has also a change-over valve such as valve(2A) for column(A), valve(2B) for column(B), valve(2C) for column(C) and valve(2D) for column(D) respectively.

The crude gas feeding pipe line(a) is further arranged to branch off another branch pipe lines designated as a desorbed gas pipe line(g) to deliver a described gas from a column after desorption process, which are arranged in the downstream of the change-over valves(1A)(1B)(1C)(1D), that is, at positions between the each change-over valve(1A to 1D) and the each bottom of column(A to D) in Fig.1. On the other hand, a recovered gas pipe line(f), which is referred to later, is arranged through each their branch pipe lines between the change-over valves(1A to 1D) and the each branch pipe line of the desorbed pipe line(g).

This desorbed gas pipe line(g) is purposed to deliver the desorbed gas from a column to perform a desorption process which is referred to later, the pipe line(g) provides two units of desorbed gas suction pump(13-a)(13-b) which are arranged in parallel with a bypass on the downstream of the pipe line(g).

The desorbed gas pipeline(g) further branches off two lines of branched pipe line(f)(f) from the downstream and upstream of the pipe line(g) so as to put the twin type suction pumps(13-a)(13-b) between both branch lines(f)(f) which has a respective change-over valve(8)(10). These branch pipe lines (f)(f) are purposed to recycle the desorbed gas delivered from the desorption processing column through the pipe line(g) into the gas pipe line(f) because the desorbed gas still contains a combustible components more or less due to the early stage of desorption process. With respect to this desorbed gas pipe line(g), this line(g) will serve both as a lower pipe line(d) of pressure uniformalization to be used in the pressurization process of this system by feeding the desorbed gas from the desorption processed column into the next column which is going to the pressurization process. In the configuration between the branched pipe lines(g) and their necessary change-over valve such as valves(6A-1)(6A-2) for the column(A), valves(6A-1)(6A-2) for the column(B), valves (6C-1)(6C-2) for the column(C) and valves(6D-1)(6D-2) for the column(D), these valves are arranged in parallel configuration and they are positioned in the downstream from those change-over valves(1A)(1B)(1C)(1D) of the crude gas feeding pipe line(a). These pair of valves are specified that either one valve has a larger flow rate resistance and the other has a smaller flow rate resistance, for example, the flow rate resistances of (6A-2),(6B-2),(6C-2) and (6D-2) are smaller than the resistances of (6A-1),(6B-1),(6C-1) and (6D-1).

As described previously, from the desorbed gas pipe line(g), these two pipe lines are branched separately that the recovered gas pipe line(f) with the change-over valve(8) is branched in the upstream of the desorbed gas suction pumps(13-a)(13-b) and also another recovered gas pipe line(f) with the change-over valve(10) is branched off in the downstream of the suction pumps. In the upstream from the suction pumps, a pair of change-over valves((9-1)(9-2) are arranged in parallel on the pipe line(g), one of them, the valve(9-2) is a change-over valve, the other one is a pressure regulating type valve which is purposed to damp the pump-shock occurred from the suction pumps wherein they constitute a shock absorbing device-(20) on the desorbed gas pipe line(g). In this pair of valves, they are also made that the flow rate resistance of one valve (9-2) is smaller than the other valve(9-1) which is made so as to not exceed a tolerable range of suction side pressure by opening and shutting the valve portion(9-1) with a valve opening degree between 0% and 100% which is capable of controlling the gas flow rate and its pressure with an optional timing.

In the halfway of the recovered gas pipe line(f), a water-sealed gas holder(12) is provided to lie between both pipe lines(f)(f) and in the downstream of the gas holder(12), a pair of a recovered gas compressors(14-a)(14-b), a recovered gas temperature control device(17) and a recovered gas surge tank(18) are provided in sequence.

With respect to the recovered gas temperature control device(17), the control device(17) consists of a heat exchanger (17-a), a bypass pipe line(17-b) arranged to put the heat exchanger(17-a) between a U-shaped bypass line and a recovered gas flow rate regulating valve(17-c) to regulate the each gas flow rate into between the cooler(17-a) and the bypass pipe line(17-b) in which are commonly arranged on the pipe line(f).

In the recovered gas pipe line(f) of the downstream from the recovered gas surge tank(18), this pipe line(f) branches off four pieces of branch pipe lines with change-over valves(3A)(3B)(3C)(3D) to communicate with the each bottom of column(A)(B)(C)(D) through the each crude gas feeding branch pipe line(a) communicating directly with the each bottom of columns.

On the other hand, a secondary re-pressurization gas pipe line(e) with a constant gas flow rate controlling valve(21) is established from the refined gas surge tank(16), and a displacement gas pipe line(h) with a change-over valve(7) and a constant gas flow rate controlling valve(22) in the downstream of the pipe line(h) is further branched off from the secondary re-pressurization gas pipe line(e) at the halfway position between the surge tank(16) and the column(D). This pipe line(e) joins the recovered gas pipe line(f) having the change-over valve(10) oriented to the water-seal gas holder(12) together with the bypass pipe line(f) from the desorbed gas pipe line(g) without passing through the pair of the desorbed gas suction pumps(13-a)(13-b).

A refined gas pipe line(b) branches off four pieces of branch pipe lines with four units of change-over valves(2A)(2B)(2C)(2D) and these branch pipe lines joint the bottom of earlier column respectivley such as the valve(2D)'s branch line(i) joins the bottom of the column(C) through a change-over valve(4C), the valve-(2C)'s branch line(i) joins the bottom of the column(B) through the valve(4B), the valve(2B)'s branch line(i) joins the bottom of the column(A) through the valve(4A) and the valve(2A)'s branch line(i) joins the bottom of the column(D) through the valve(4D) as take a round over the four columns.

The above each branch line(i) further branches off additional four pieces of branch lines(c) which is used as a pressure uniformalization upper pipe line(c) to join the secondary re-pressurization pipe line(e) respectively through change-over valve(5A)(5B)(5C)(5D).

In this way, a central control system of the present invention (not shown in the drawings) instructs these change-over valves, which are positioned on each pipe line as described in the above such as the valves-(1A to 1D), (2A to 2D), (3A to 3D), (4A to 4D), (5A to 5D), (6A-1 to 6D-2), (7), (8), (9-1)(9-2), (10) and (11) so as to perform opening and shutting(on/off) these valves respectively wherein controls the gas flow rate in various stages according to the valve operational rotations as shown in Table 1. On the other hand, the central control system of the present invention also instructs to operate the four units of the columns(A)(B)-(C)(D) according to Table 2 wherein respective column is operated with four cycles such as an adsorption process, a super-adsorption process, a desorption process (depressurization) and a pressurization process in which each process is further separated with five steps respectively. Table 3 shows the gases flows having five steps.

Now the composition of the above pipe line are put in order in Table 4.

**Table 1**

**Each valve opening & shutting rotation in each Step**

X :shutting
O :opening

| STEP | 1 | | 2 | 3 | 4 | 5 | 1 | | 2 | 3 | 4 | 5 | 1 | | 2 | 3 | 4 | 5 | 1 | | 2 | 3 | 4 | 5 |
|---|---|---|---|---|---|---|---|---|---|---|---|---|---|---|---|---|---|---|---|---|---|---|---|---|
| TIME (sec) | 1 | 2 | | | | | 1 | 2 | | | | | 1 | 2 | | | | | 1 | 2 | | | | |
| | 20 | 2 | 30 | 30 | 45 | 15 | 20 | 2 | 30 | 30 | 45 | 15 | 20 | 2 | 30 | 30 | 45 | 15 | 20 | 2 | 30 | 30 | 45 | 15 |
| 1 A | O | O | O | O | O | O | X | X | X | X | X | X | X | X | X | X | X | X | X | X | X | X | X | X |
| 1 B | X | X | X | X | X | X | X | X | X | X | X | X | X | X | X | X | X | X | O | O | O | O | O | O |
| 1 C | X | X | X | X | X | X | X | X | X | X | X | X | O | O | O | O | O | O | X | X | X | X | X | X |
| 1 D | X | X | X | X | X | X | O | O | O | O | O | O | X | X | X | X | X | X | X | X | X | X | X | X |
| 2 A | O | O | O | O | O | O | X | X | X | X | X | X | X | X | X | X | X | X | X | X | X | X | X | X |
| 2 B | X | X | X | X | X | X | X | X | X | X | X | X | X | X | X | X | X | X | O | O | O | O | O | O |
| 2 C | X | X | X | X | X | X | X | X | X | X | X | X | O | O | O | O | O | O | X | X | X | X | X | X |
| 2 D | X | X | X | X | X | X | O | O | O | O | O | O | X | X | X | X | X | X | X | X | X | X | X | X |
| 3 A | X | X | X | X | X | X | O | O | O | O | O | O | X | X | X | X | X | X | X | X | X | X | X | X |
| 3 B | O | O | O | O | O | O | X | X | X | X | X | X | X | X | X | X | X | X | X | X | X | X | X | X |
| 3 C | X | X | X | X | X | X | X | X | X | X | X | X | X | X | X | X | X | X | O | O | O | O | O | O |
| 3 D | X | X | X | X | X | X | X | X | X | X | X | X | O | O | O | O | O | O | X | X | X | X | X | X |
| 4 A | O | O | O | O | O | O | X | X | X | X | X | X | X | X | X | X | X | X | X | X | X | X | X | X |
| 4 B | X | X | X | X | X | X | X | X | X | X | X | X | X | X | X | X | X | X | O | O | O | O | O | O |
| 4 C | X | X | X | X | X | X | X | X | X | X | X | X | O | O | O | O | O | O | X | X | X | X | X | X |
| 4 D | X | X | X | X | X | X | O | O | O | O | O | O | X | X | X | X | X | X | X | X | X | X | X | X |
| 5 A | X | X | X | X | X | X | X | X | X | X | X | X | O | O | X | X | X | X | O | O | O | O | O | O |
| 5 B | X | X | X | X | X | X | O | O | O | X | X | X | O | O | O | O | O | O | X | X | X | X | X | X |
| 5 C | O | O | X | X | X | X | O | O | O | O | O | O | X | X | X | X | X | X | X | X | X | X | X | X |
| 5 D | O | O | O | O | O | O | X | X | X | X | X | X | X | X | X | X | X | X | O | O | X | X | X | X |
| 6 A -1 | X | X | X | X | X | X | X | X | X | X | X | X | O | O | O | O | O | O | O | O | X | X | X | X |
| 6 A -2 | X | X | X | X | X | X | X | X | X | X | X | X | O | O | O | O | O | O | O | O | X | X | X | X |
| 6 B -1 | X | X | X | X | X | X | O | O | O | O | O | O | O | O | O | X | X | X | X | X | X | X | X | X |
| 6 B -2 | X | X | X | X | X | X | O | O | O | O | O | O | O | O | O | X | X | X | X | X | X | X | X | X |
| 6 C -1 | X | O | O | O | O | O | O | O | X | X | X | X | X | X | X | X | X | X | X | X | X | X | X | X |
| 6 C -2 | O | O | O | O | O | O | O | O | X | X | X | X | X | X | X | X | X | X | X | X | X | X | X | X |
| 6 D -1 | O | O | X | X | X | X | X | X | X | X | X | X | X | X | X | X | X | X | O | O | O | O | O | O |
| 6 D -2 | O | O | X | X | X | X | X | X | X | X | X | X | X | X | X | X | X | X | O | O | O | O | O | O |
| 7 | X | X | X | X | X | O | X | X | X | X | X | X | O | X | X | X | X | X | O | X | X | X | X | O |
| 8 | X | X | O | X | X | X | X | X | O | X | X | X | X | X | X | O | X | X | X | X | O | X | X | X |
| 9 -1 | X | X | X | O | O | O | X | X | X | O | O | X | X | X | X | O | O | X | X | X | O | O | X | O |
| 9 -2 | X | X | X | O | O | X | X | X | X | O | O | X | X | X | X | O | X | X | X | X | O | X | X | X |
| 10 | X | X | X | X | O | O | X | X | O | O | O | O | O | O | X | O | O | O | O | O | O | X | O | O |
| 11 | O | O | O | X | O | O | O | O | X | O | O | X | O | O | O | X | O | O | O | O | X | O | O | O |

EP 0 394 947 A2

TABLE 2

| CYCLE | 1 | | | 2 | | | 3 | | | 4 | | |
|---|---|---|---|---|---|---|---|---|---|---|---|---|
| STEP | 1 2 3 | 4 | 5 | 6 7 8 | 9 | 10 | 11 12 13 | 14 | 15 | 16 17 18 | 19 | 20 |
| **Column A** | Adsorption process | | | Super-adsorption process | | | Desorption process | | | Pressurization process | | |
| | | Adsorption (extract a refined gas) | | | Super-adsorption (re-adsorption) | Displace | Pressure uniformisation / Self-depressurisation / Depressurization by suction | Desorption by suction (extract carbon dioxide gas) | | Primary pressurization | Secondary pressurization | Hold-on |
| **Column B** | Super-adsorption process | | | Desorption process | | | Pressurization process | | | Adsorption process | | |
| | | Super-adsorption (re-adsorption) | Displace | Pressure uniformisation / Self-depressurisation / Depressurization by suction | Desorption by suction (extract carbon dioxide gas) | | Primary pressurization | Secondary pressurization | Hold-on | | Adsorption (extract a refined gas) | |
| **Column C** | Desorption process | | | Pressurization process | | | Adsorption process | | | Super-adsorption process | | |
| | Pressure uniformisation / Self-depressurisation / Depressurization by suction | Desorption by suction (extract carbon dioxide gas) | | Primary pressurization | Secondary pressurization | Hold-on | | Adsorption (extract a refined gas) | | | Super-adsorption (re-adsorption) | Displace |
| **Column D** | Pressurization process | | | Adsorption process | | | Super-adsorption process | | | Desorption process | | |
| | Primary pressurization | Secondary pressurization | Hold-on | | Adsorption (extract a refined gas) | | | Super-adsorption (re-adsorption) | Displace | Pressure uniformisation / Self-depressurisation / Pressure uniformisation | Desorption by suction (extract carbon dioxide gas) | |

EP 0 394 947 A2

(Table 8) Contents of Steps when column (A) is in adsorption process (refinement)

| | cycle | gas flow sequence |
|---|---|---|
| STEP 1 | adsorption(refinement) | ①→column A→② |
| | super-adsorption (re-adsorption) | holder→compressor→⑨→column B→⑪ |
| | primary pressurization (uniformalization) | column C→④→column D |
| | secondary pressurization | ②→⑤→column D |
| STEP 2 | adsorption(refinement) | ①→column A→② |
| | super-adsorption (re-adsorption) | holder→compressor→⑨→column B→⑪ |
| | secondary pressurization | ②→⑤→column D |
| | self-depressurization | column C→③→⑥→holder |
| STEP 3 | adsorption(refinement) | ①→column A→② |
| | super-adsorption (re-adsorption) | holder→compressor→⑨→column B→⑪ |
| | secondary pressurization | ②→⑤→column D |
| | depressurization by suction | column C→③→suction pump→⑦→holder |
| STEP 4 | adsorption(refinement) | ①→column A→② |
| | super-adsorption (re-adsorption) | holder→compressor→⑨→column B→⑪ |
| | secondary pressurization | ②→⑤→column D |
| | desorption by suction | column C→③→suction pump→⑧ |
| STEP 5 | adsorption(refinement) | ①→column A→② |
| | super-adsorption (re-adsorption) | holder→compressor→⑨→column B→⑪ |
| | rinsing | ②→⑩→holder→compressor→⑩ |
| | desorption by suction | column C→③→suction pump→⑧ |
| | hold-on | column D |

① unprocessed crude gases    ② refined gas (combustible component gas)

③ desorbed gas    ④ primary pressurized gas (uniformalization)

⑤ secondary pressurized gas    ⑥ self-depressurized gas

⑦ depressurized by suction gas    ⑧ desorbed by suction gas (carbon dioxide gas)

⑨ recovered gas    ⑩ rinsing gas

⑪ recycle gas

Table 4

| pipe line designation | | pipe line composition |
|---|---|---|
| unprocessed crude gas feeding pipe line | a | gas producer → ① → column A |
| recycle gas pipe line | i | column B → ⑪ |
| recovered gas pipe line | f | ⑥ ⑦ → holder → compressor → recovered gas temperature controller → ⑨ → column B |
| desorbed gas pipe line | g | column C → ⑧ → suction pump → ⑩ |
| secondary pressurized gas pipe line | e | refined gas surge tank → constant flow rate regulating valve → ⑤ → column D |
| rinsing gas pipe line | h | refined gas surge tank → constant flow rate regulating valve → ⑬ → holder |
| refined gas pipe line | b | column A → ② → refined gas surge tank |

Table 5

| gas composition analyzed value and flow rate in operation | | | | | | |
|---|---|---|---|---|---|---|
| | | ①unprocessed crude gases | ②refined gas | ⑧desorbed by suction gas | ⑨recovered gas | ⑪ re-cycle gas |
| composition (Vol%) | $H_2$ | 2.78 | 3.61 | 0.00 | 1.00 | -3.41 |
| | $CH_4$ | 72.12 | 96.05 | 1.03 | 23.23 | 80.95 |
| | $CO_3$ | 25.15 | 0.34 | 98.97 | 75.77 | 15.64 |
| flow rate(Nm³/h) | | 502 | 376 | 126 | 87 | 26 |
| operational conditions: | | | | | | |
| adsorption temperature 30°C gas pressure in adsorption 9kg/cm²G recovered gas temperature 90°C unprocessed crude gas flow rate 502Nm³/hr | | | | | | |

Table 6

| measured values of gas moisture contents | | |
|---|---|---|
| | moisture concentration (g/Nm$^2$) | the dew point (atomospheric pressure base) |
| unprocessed crude gases | 3.9 | 4 |
| refined gas | 0.034 | -45 |
| operational conditions: | | |
| adsorption temperature 30 °C gas pressure in adesorption 9kg/cm$^2$G recovered gas temperature 90 °C unprocessed crude gas flow rate 502Nm$^3$/hr | | |

Referring now in detail to the column(A), particularly to the contents of steps during the adsorption process in accordance with Fig.1, Fig.2 and Fig.4.

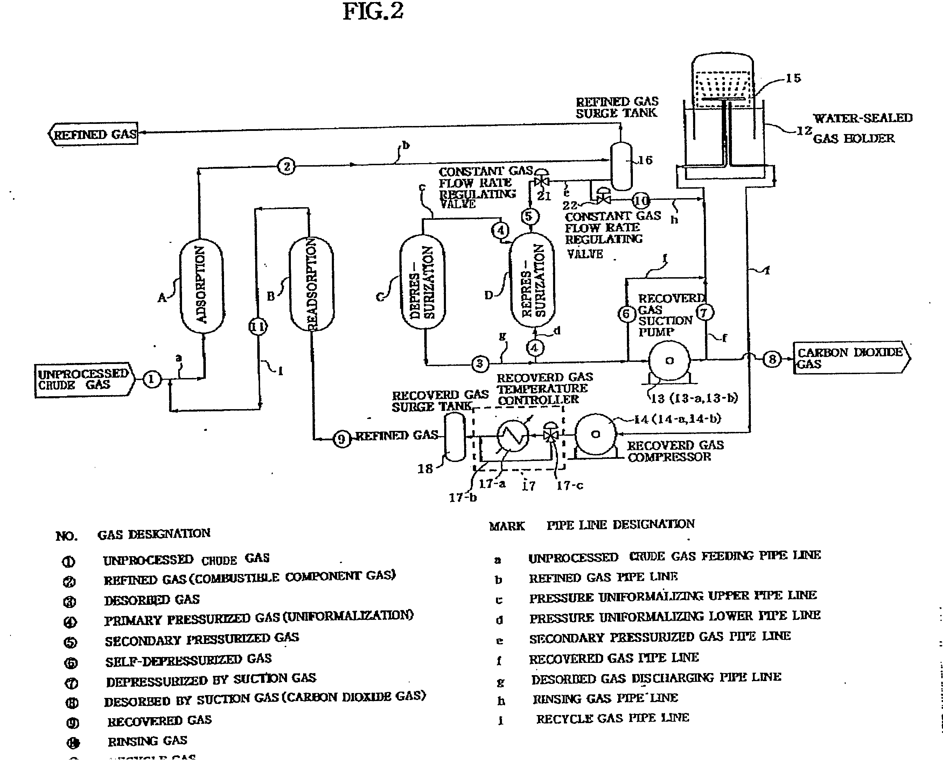

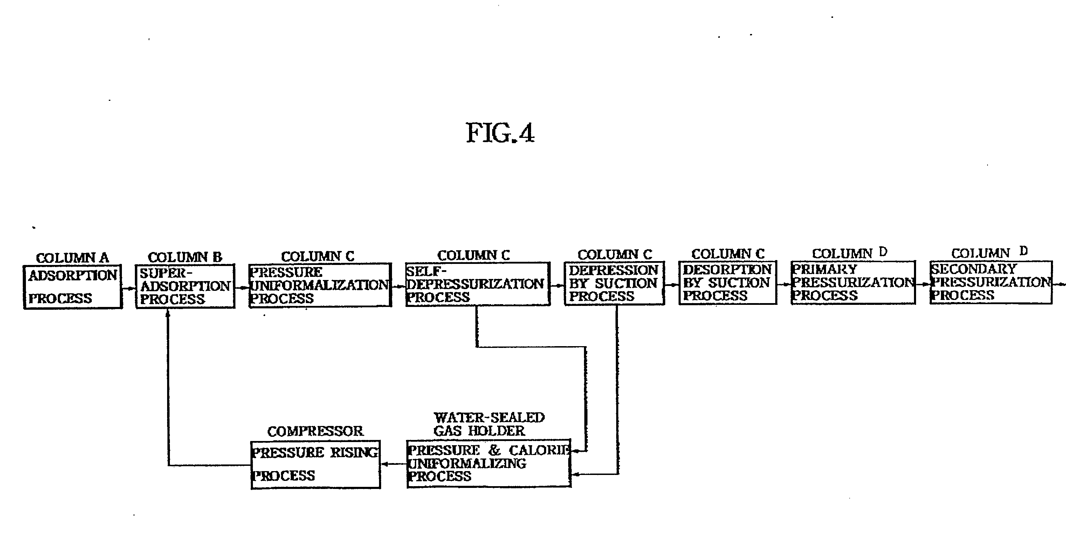

As shown in Fig.2 and Fig.4, when the column(A) is in the state of adsorption process, the other three columns(B)(C)(D) are in state of that the column(B) is in the super-adsorption (re-adsorption) process including a displacement step, the column(C) is in the desorption (depressurization) process which consisting of a serial steps of a pressure uniformalization, a self-depressurization, a depressurization by suction, and the last column(D) is in the pressurization process including a primary pressurization step, a secondary pressurization step and a displacement step. The composition of the above each pipe line is shown in Table 4.

In the operation of each change-over valve, these valves(1A), (2A), (3A), (4A), (5C), (5D), (6C-1), (6C-2), (6D-1), (6D-2) and (11) are instructed to open then the crude gases[1] is fed into the column(A) through the crude gases feeding pipe line(a) wherein $CO_2$ gas and moisture which are contained within the crude gases are adsorbed by the adsorbent within the column(A) to refine them to a refined gases[2], wherein the refined gas[2] is finally discharged into an well known caloric regulation device in the downstream from this system through the refined gas feeding pipe line(b), and the refined gas surge tank(16).

In the specific pressure of the crude gases, it is referred to as 9 kg/cm$^2$ for the convenience of explanation hereafter.

It is referred to the relationship between the crude gases pressure and the process in each column. The efficiency of adsorbent is related to the pressure of crude gas, that is, the more the gas pressure is higher, the more the efficiency of adsorbent is increased although there is a pressure limitation from the mechanical durability against the pressure. The maximum pressure 9 kg/cm$^2$ of the crude gases is established from the above reason.

In Table 2, in the column(C) for example, now the column(C) is going into the desorption process by force suction (removing $CO_2$ gas) and then enters into Step 1, that is, the pressure uniformalization step. This means to release any way the pressured gas(9 kg/cm$^2$) contained within the column(C), because the desorption from the adsorbent is achieved by depressurizing the gas pressure surrounding the adsorbent.

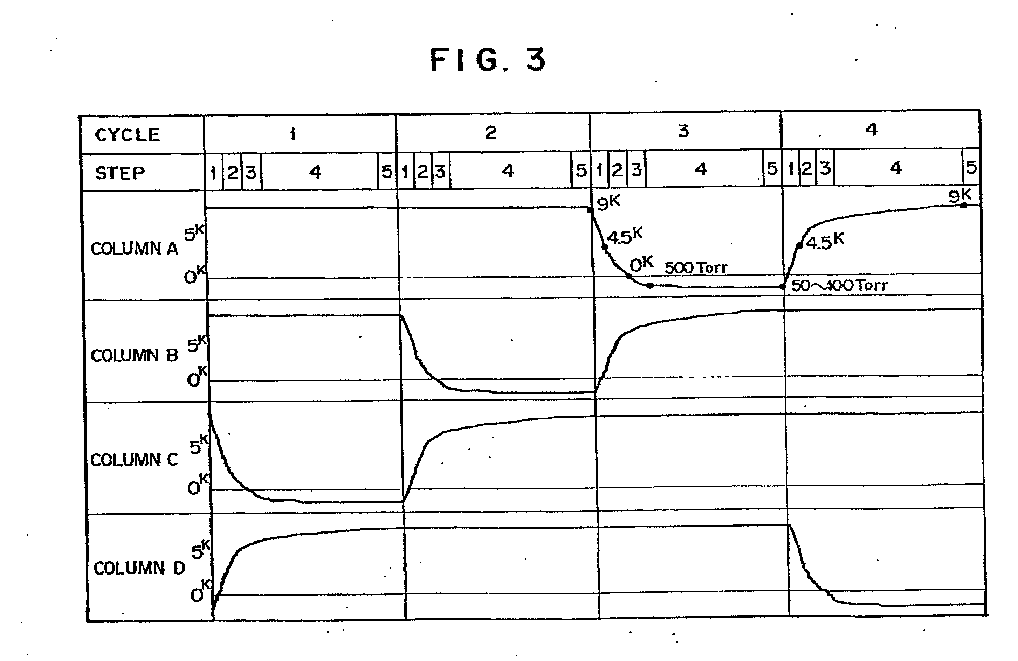

In Fig.3, the column(C) contains 9 kg/cm$^2$ of gas which is still remained due to the earlier process of the column(C). In Step 1, this gas is moved to the neighbor column(D) which has no pressure due to the earlier process of the column(D). These pressure fluctuations occurred between both columns(C)(D) are clearly disclosed in Fig.3. In Cycle 1, in Step 1, the pressure graph of column(C) descends rapidly to around 3 kg/cm$^2$ from around 9 kg/cm$^2$ in the vertical frame of Step 1, in contrast the other graph of column(D) rises rapidly at around 3 kg/cm$^2$, thus it is understandable that both pressures have been balanced together at around 3 kg/cm$^2$, that is, they are uniformalized in Step 1 of Cycle 1 in Fig.3.

With respect to the configuration of shifting the 9 kg/cm$^2$ gas between the column(C) and the column-(D), Fig.2 is prepared specially to facilitate the understanding of the shifting in addition to Fig.1. In the column(C) and column(D) in Fig.2, now column(C) has finished the desorption process with 9 kg/cm$^2$ gas filled which is further used as the primary re-pressurization gas[4] for the column(D) which is empty with any gas by shifting the gas[4] through the both pipe lines such as the branch line(c) in the upper portion of column(C) and the branch lines(g)(d) connecting the respective bottom of both columns. By doing so, the both column gas pressures are uniformalized almost equally at around 3 kg/cm².

In the early stage of the pressure uniformalization step in the column(C), as the profile of column(C) in vertically sliced section, there remains in the upper portion a gases which contain a highly purified combustible components refined after the removal of $CO_2$ from the previous gases recovered by the super-adsorption process in the previous process of column(C), on the other hand in the lower portion, there remains an unprocessed recovery gases, therefore, it is noted that these gases[4] to be shifted to the column(D) still contain a considerable contents of combustible components.

In addition to the above shifted gases[4], another additional gases[2] is further supplied into the column-(D) from the refined gas surge tank(16) through the pipe line(e) with a constant gas flow rate regulating valve(21) so as to not give any fluctuation in the pressure for pressurizing the column(D) which is going to the adsorption process. This additional gas is further defined as the secondary re-pressurization gas[5] in this system.

With respect to the water-sealed gas holder(12), a recovered gas which is recovered in one process before is held within the gas holder(12), this recovered gas is sucked by the twin type recovered gas compressors(14-a)(14-b) from the gas holder(12) through the pipe line(f) and then supplied into the column-(B) through the recovered gas temperature controller(17) and the recovered gas surge tank(18). This gas is further defined as a super-adsorption gas(or recovered gas)[9]. Upon the completion of the super-adsorption process performed in the column(B) with the recovered gas[9], this processed gas is further returned into the crude gases feeding pipe line(a) through the pipe line(i) as shown in Fig.2.

It is referred to the structure of the water-sealed gas holder (12) in detail. The gas holder(12) has an well known structure and aspect in the art such as a gas float tank(12-b) moves up and down in a water tank(12-a) by inserting the gas float tank(12-b) into the water tank(12-a), however, this gas holder (12) provides to equip a gas uniformalizing means(15) to uniformalize the gases mixture specially. The gas uniformalizing means(15) consists of a ring shaped gas diffuser(15-b) with a gas feeding pipe(15-a) risen in upright at the axis of the gas float tank(12-b) and a gas discharging pipe(15-c) risen in upright adjacent to the gas feeding pipe(15-a) in parallel. The ring tube shaped gas diffuser(15-b) provides to bore a number of gas jetting nozzles equally along the inner and outer peripheries of the ring tube and the jetting nozzles are further arranged to have a necessary jetting angle. the gas discharging pipe(15-c) provides to open the free end thereof at the center of the circle of ring tube gas diffuser(15-b) to intake the gases , which is the recovered gas[9], charged in the gas holder(12).

The recovered gas[9] is drawn by the recovered gas compressors (14-a)(14-b) from the gas holder(12) through the gas discharging pipe(15-c), and then compressed to charge into the recovered gas temperature controller(17). Regarding the gas temperature of the recovered gas[9], it is noted that as a preferable gas temperature at the inlet of the super-adsorption process, it is regulated more than at 90°C by cooling or heating up through the temperature controller(17-a) according to the operational conditions, because this preferable gas temperature of 90°C is advantageous when the gas is further shifted into the next process of the desorption process.

The aforementioned the adsorption process and the super-adsorption process are to be performed continuously through Step 1 to Step 5.

Referring now to Step 2, in the column(C), as mentioned previously, this column(C) still remains an amount of gases having the pressure of 3 kg/cm² even after the completion of pressure uniformalization step as ranked in Step 1. This remainder gases, which is designated as a self-depressurization gas[6], are further discharged into the water-sealed gas holder(12) by shutting the valves(5c), (6D-1) and (6D-2), and contrarily opening the valve(8) through the pipe lines(g)(f) in Fig.1. It is noted that the water-sealed gas holder(12) is regulated to keep the internal pressure at 0.02 kg/cm² (200mm $H_2O$) constantly, therefore, according to the opening of these circuits to communicate with the gas holder(12), the pressure of column-(C) becomes to be depressurized until at 0.02 kg/cm² from 3 kg/cm² without any mechanical aid. This step is designated as the self-depressurization step and as Step 2.

In Step 3, the column(C) is further depressurized by the desorbed gas suction pump(13-a)(13-b) by shutting the valves(8) (11) and opening the valves(9-1)(9-2)(10), and then the the pressure of column(C) is depressurized until approximately at 500 Toor. by the suction pumps. The sucked gases from the column-(C), which is designated as a depressurization gas[7] by suction, is further sent into the gas holder(12) through the desorbed gas discharging pipe line(g) and the recovered gas pipe line(f). In order to reduce the shock affected by the sudden start of these suction pumps, firstly the valve (9-2) is opened priorly and then the other valve(9-1) is gradually opened so as to not exceed the tolerable pressure range of suction side.

In Step 4, the column(C) is still futher depressurized until at 50 Torr. from 500 Torr. by the continuous operation of suction pumps by shutting the valve(10) and opening the valve(11) and urges the adsorbent to desorb $CO_2$ gas and moisture by such the extremely lower pressure. These desorbed gases containing a

high content of $CO_2$ gas and moisture, which is designated as a exhaust $CO_2$ gas[8], are finally exhausted from the system to the outside as the rest-gas through the desorbed pipe line(g) in Fig. 1.

It is noted that to desorb an adsorbed contents within the adsorbent is to regenerate the adsorbent actively again so that the more the vacuum degree becomes deeper, the more the regenerative degree of adsorbent becomes improve, thus it depends on the vacuum making ability of the suction pump. It is noted that the sucking volume of gas becomes smaller according to the progress of vacuum degree. It is also noted that the $Co_2$ gas concentration contained within the sucked gas becomes higher step by step according to the progress of vacuum degree and the contents ratio of $CO_2$ gas becomes larger in the sucked gases and in contrast the content ratio of $CH_4$ becomes smaller.

In Step 5, this step is purposed to rinse the recovered gas pipe line(f) by the refined gas[2]. In this purpose, the partial amount of refined gas[2], which is designated as a displacement gas[10], is delivered from the refined gas surge tank(16) through a displacement gas pipe line(h) by opening the valve (7) and this displacement gas[10] advances into the gas holder(12), after passing through there, this gas[10] further advances into the recovered gas pipe line(f) and then a remained old gases within the pipe line(f) is totally purged and displaced by this displacement gas[10]. This displacement process is effective to enhance the concentration on the part of combustible component contained within the refine gas in next process. In this Step 5, the column(D) is kept as a hold-on state.

A gas pressure change in each column is shown in the graph of Fig.3. From these graph it is clearly understandable that the both pressures of neighbor columns are balanced each other well when a column is switched to a next process, to which means that any switch of process does not give any shock trouble upon the pipe line system and others.

With respect to the gas composition and flow rate in each step, they are listed up in Table 5 according to the analytic data from the preferred parctical example of the present invention.

As self-explanatory from Table 5, according to the improved PSA system of the present invention, this system can recover an effective component usable for the city gas with an extremely high recovery ratio from the exhaust gases, consequently the combustible components are hardly contained within the desorbed gas by suction($CO_2$ gas).

Regarding the process of producing the recovered gas, it is refined additionally by using the super-adsorption process uniquely in a column which performs the super-adsorption process. In this super-adsorption process, the adsorbent employed in this invention i.e. a carbon molecular sieve with 3 A of pore diameter in average, has a preferable properties for the adsorption process of the present invention, that is, this adsorbent can adsorb mainly $CO_2$ gas concentratively and adsorbs a few $HC_4$. In Table 5, referring to the contents of the recovered gas, it contains 1.00% of $H_2$ gas, 23.23% of $CH_4$ gas and 75% of $CO_2$ gas, therefore, the partial pressure of $CO_2$ gas is higher than the partial pressure of $CH_4$ so that this adsorbent adsorbs $CO_2$ gas largely, consequently a considerable amount of $CH_4$ gas having a high concentration of $CH_4$ is condensed and filled in the upper portion of the adsorption column and then this recovered gas containing the high content of $CH_4$ gas is recycled into the crude gas feeding pipe line. With respect to the moisture, as shown in Table 6, the moisture is removed sufficiently by the adsorbent.

The effect and advantage of the present invention are apparent from the aforementioned preferred embodiment, which are further summarized as follows:

I. Since both ways two lines of recovered gas pipe line (f)(f) are provided so as to put the water-sealed gas holder(12) between the two lines in which one of them being branched off from the desorbed gas pipe line(g) which delivers the desorbed gas from a desorption column into the gas holder(12) through the desorbed gas suction pumps(13-a)(13-b), the $CH_4$ component is taken out and recovered from the mixture gases containing $CH_4$ and $CO_2$ gases by utilizing the time difference of desorption speed caused between $CH_4$ and $CO_2$ gases wherein the $CH_4$ content is taken out early until the beginning of the desorption by suction process, upon completion of separating the $CH_4$ component, sequentially the $CO_2$ gas is separated later on during the desorption by suction process wherein a highly purified $CO_2$ gas can be separated, whereby it can effectively recover the combustible components from the exhaust gases(rest-gases) produced by the method of pressure swing adsorption, thus can minimize the loss of separation.

It is further referred to the super-adsorption process. In the super-adsorption, $CO_2$ gas is selectively re-adsorbed from the recovered gas, more particularly it is to make the adsorbent which once adsorbed $CO_2$ gas from the crude gas in the adsorption process to further adsorb a highly concentrated additional $CO_2$ gas from the recovered gas in the super-adsorption process, because the recovered gas has a lower concentration's $CH_4$ in comparison with the crude gas, however, as far as $CO_2$ gas concentration, the recovered gas has a much higher concentration of $CO_2$ gas than the crude gas, therefore, the partial pressure of $CO_2$ gas is higher than $CH_4$ gas wherein it can force the adsorbent to further adsorb an additional $CO_2$ component according to the higher partial pressure of $CO_2$ gas from the recovered gas

13

containing only a few CH₄ content. This additional adsorption of $CO_2$ content is designated as the super-adsorption process in the present invention.

II. In addition to the above, since the gas temperature of the recovered gas can be risen by the temperature controller(17-a) during the super-adsorption process so as to accelerate the desorption of CH₄ in the next process of desorption in which was adsorbed commonly with $CO_2$ upon the adsorbent, wherein it can reduce the concentration of the combustible component contained within the desorbed gas, at the same time it can facilitate the desorption of $CO_2$ and then can make the adsorbent to regenerate sufficiently, whereby it can enhance the purity of combustible component from the refined gases.

III. Since it provides two pipe lines such as a pressure uniformalizing lower portion pipe line(c) as well as a pressure uniformalizing upper portion pipe line(c), the lower portion pipe line(c) connects the bottom portion of a column which performs the desorption process with the bottom of another column which performs the pressurization process, the upper portion pipe line(c) also connects with the each upper portion of the above both columns, the depressurization of the column performing the desorption-(depressurization) is performed through the both upper and lower portions of the column, that is, the pressure uniformalizing gas can supply into the column through the upper and lower portions of the column as a primary pressurizing gas, wherein the high purity combustible component contained within the upper portion of the desorption column can shift into the upper portion of the pressurizing column, as well as the combustible component of the recovered gas contained within the lower portion of the desorption column can shift into the lower portion of the pressurization column, thus it is effective to enhance the purity of desorbed component($CO_2$) of the desorption process.

In addition, since it can perform to shift the component so as to be advantageous to obtain a highly purified combustible component in the adsorption process by adjusting the delivery rate into the both upper and lower portions of the column which is in state of the pressurizing process according to the component gradient within the column which has been finished the super-adsorption process, it is effective to enhance the purity of combustible component, thus the purity of the combustible component of refined gas and the purity of $CO_2$ within the desorbed gas by suction.

IV. With respect to the adsorbent employed in the present invention, generally it can employ another type absorbent such as a carbon type, a zeolite type, a silica gel type and the like, however, a carbon molecular sieve having 3 Å of pore diameter in average has been specially employed in the present invention, because, except for the carbon type, the other typ absorbents commonly trend to reduce their absorbabilities and/or desorbabilities seriously when a crude gases contain a considerable amount of moisture. From this trend, the use of the other type absorbents is required to subject to a moisture removing treatment with a dehydration device in the upstream prior to the use.

By using this carbon molecular sieve having 3 Å of pore diameter in average, it absorbs $CO_2$ gas selectively and an extremely lower rate of CH₄ gas which is the major components, therefore, it can reduce the concentration of $CO_2$ gas contents within the refined gases after the $CO_2$ adsorption and also it can reduce the concentration of CH₄ gas contents to be wasted together with the exhaust gases(rest-gas) to the outside in the last stage, to which can reduce drastically the loss of combustible component usable for the city gas production.

As another advantage of this type adsorbent relating to the temperature properties in constant use, it is usable in the normal temperature in the desorption of $CO_2$ gas and moisture, in contrast the other type adsorbents required to heat up the material temperature of crude gas at more than 100°C in order to facilitate the desorption of $CO_2$ and moisture, to which it can contribute the energy conservation in industry.

As further advantage having this adsorbent relating to the system size of the present improved type PSA system in design, it can design to minimize the whole system whereby can save the initial cost and the sequent running cost in the operation because this adsorbent adsorbs a very few CH₄ gas to that the produced gas volume itself becomes smaller in the desorption process because of the very few contents of CH₄ gas within the desorbed gases except for the major content of $CO_2$ gas, to which means that the total produced gas volume is drastically smaller than the conventional, thus it can minimize the size of the whole system.

V. In the multiple effects of combining the above paragraph I, II, AND IV, it can accelerate the effective recovery of the combustible component from the exhaust gases(rest-gas) which is produced by the method of pressure swing adsorption, in addition it can obtain both a highly purified combustible component and a high purity's $CO_2$ gas simultaneously.

VI. Since this system is characterized by providing a water-sealed gas holder(12) to lie between both recovered gas pipe lines(f)(f), which has a means to uniformalize mostly the gas component and pressure of gas mixture containing a carbon dioxide and combustible components which are particularly fluctuated when the desorbed gas is sucked by the suction pumps(13-a)(13-b) and further charged into the gas holder-(12) through those recovered gas pipe lines(f)(f). Regarding the fluctuation of gas pressure when the recovered gas compressors(14-a)(14-b) are going to suck the reserved gases from the gas holder(12) and then feed them into the column of super-adsorption process, the compressors' suction pressure is kept constant by means of the existence of the gas holder(12), thus it is remarkably effective to minimize the fluctuations of recovered gas flow rate and its components. According to the employment of such the gas holder(12), it can solve the fluctuations of these gas pressure, flow rate and components in which have been deemed as a problem in the conventional type PSA system without any bad influences for the upstream and downstream sides such as an well known gas producer and caloric regulating device.

VII. Further to the fluctuation of gas pressure, it provides a plurality of constant gas flow rate regulating valves(21)(22) on the secondary pressurizing pipe line(e) and also on the displacement gas pipe line(h) wherein the partial amount of refined gas is supplied into each column as the pressurizing gas for them with a constant flow rate, whereby this system does not give any disturbance caused by gas pressure fluctuation to those assistant devices in the upstream and downstream.

VIII. In cooperation with the above paragraphs VI and VII, this system can solve the fluctuations of gas pressure, gas flow rate and components which have been regarded as the disadvantage of the PSA method, and can eliminate the disgust affections for the upstream and downstream devices such as the gas producer and the caloric regulation device, whereby there is no fear to cause any caloric fluctuation of the products gases.

This invention may be embodied in other specific forms without departing from the spirit or essential characteristics thereof. The present embodiment is therefore to be considered in all respects as illustrative and not restrictive, the scope of the invention being indicated by the appended claims rather then by the foregoing description and all changes which come within the meaning and range of equivalence of the claims are therefore intended to be embraced therein.

**Claims**

1. Apparatus for removing carbon dioxide gas and moisture from methane-rich gas mixture, applying the method of pressure swing adsorption, comprising four units of adsorption column (A)(B)(C)(D) to perform each process in sequence cyclically under rotation such as an adsorption process including an adsorption step, a super-adsorption process including a displacement step, a desorption process including a serial steps of a pressure uniformalization, a self-depressurization, a depressurization by suction and a desorption by suction, and a pressurization process including a primary pressurization step, a secondary pressurization step and a hold-on steps, characterized in that a desorbed gas pipe line(g) provided from a column(C) which performs the desorption process through a desorbed gas suction pumps(13-a)(13-b), that a recovered gas pipe line(f) provided to be branched off from the desorbed gas pipe line(g), the recovered gas pipe line(f) further provided to arrange a water-sealed gas holder(12), a recovered gas compressors(14-a)(14-b) and a recovered gas temperatur control device(17-a) on the same line(f), the recovered gas pipe line(f) still provided to connect with a column(B) which is ready to perform the super-adsorption process upon the completion of the adsorption process in one process before, and that an apparatus provided to connect by pipe lines with the column(B) which has been performed the super-adsorption process, a recycle gas pipe line(i), a crude gas feeding pipe line(a) and a column(A) which will perform the adsorption process, wherein the apparatus can recover a combustible gas components contained within the desorbed gases.

2. An apparatus as claimed in claim 1, wherein a pressure uniformalizing lower pipe line(c) provided to connect a column which performs the desorption process with another column which performs the pressurizing process at each bottom portion together, as well as a pressure uniformalizing upper pipe line(c) connecting the both columns in the above at their upper portions.

3. An apparatus as claimed in claim 1 or claim 2, wherein a refined gas pipe line((b) provided to connect the upper portion of a column which performs the adsorption process with a refined gas surge tank(16), a secondary pressurizing pipe line(e) provided to connect the refined gas surge tank(16) with the upper portion of a column which performs the pressurization process for charging the partial amount of the refined gas into the upper portion of the column thereof, and a constant gas flow rate regulating valve(21) provided on the secondary pressurizing pipe line(e) for performing the secondary pressurization step by regulating the flow rate of secondary pressurizing gases constantly.

4. An apparatus as claimed in claim 1, wherein a water-sealed gas holder(12) having a means to uniformalize a gases components and their pressures is arranged on the recovered gas pipe line(f).

5. An apparatus as claimed in claim 1 or claim 3, wherein a displacement gas pipe line(h) provided to deliver the partial amount of the refined gas into the water-sealed gas holder(12) from the refined gas surge tank(16), a constant gas flow rate regulating valve(22) provided on the displacement gas pipe line(h), whereby the recovered gas pipe line(f) is rinsed by the partial amount of the refined gas as a displacement gas in the same gaseous flow rate with the flow rate of the secondary pressurizing gas.

6. An apparatus as claimed in either of claim 1 or claim 5, wherein a recovered gas temperature control device(17) is arranged so as to put the control device between the both recovered gas pipe lines(f)(f).

7. An apparatus as claimed in claim 1 to claim 6, wherein an adsorbent is selected from the group consisting of a carbon molecular sieve having approximately 3 Å of pore diameter in average and the like.

# FIG.1

REFINED GAS

16 REFINED GAS SURGE TANK

21 b

CONSTANT GAS FLOW RATE REGULATING VALVE

c 5D e

12-b WATER-SEALED GAS HOLDER

15 12-a 15-b

15-a 12

15-c

5A 2A 5B 2B 5C 2C 5D 2D

A B C D CONSTANT GAS FLOW RATE REGULATING VALVE

h

22 7

UNPROCESSED CRUDE GAS

a

4A 4B 4C 4D

8 10

9-2 RECOVERED GAS SUCTION PUMP

13-a

1A 6A-2 3B 6B-2 3C 6C-2 3D 6D-2

3A 6A-1 1B 6B-1 1C 6C-1 1D 6D-1 d 9-1 20 13-b 11

CARBON DIOXIDE GAS

SHOCK ABSORBER FOR RECOVERED GAS SUCTION PUMP

g

14-a

18 17-a 17 17-b 17-c 14-b

RECOVERED GAS SURGE TANK

RECOVERED GAS TEMPERATURE CONTROLLER

RECOVERED GAS COMPRESSOR

EP 0 394 947 A2

# FIG.2

REFINED GAS

UNPROCESSED CRUDE GAS

WATER-SEALED GAS HOLDER

15

12

CARBON DIOXIDE GAS

REFINED GAS SURGE TANK

16

CONSTANT GAS FLOW RATE REGULATING VALVE

CONSTANT GAS FLOW RATE REGULATING VALVE

ADSORPTION — A

READSORPTION — B

DEPRES-SURIZATION — C

REPRES-SURIZATION — D

RECOVERD GAS SUCTION PUMP

RECOVERD GAS TEMPERATURE CONTROLLER

RECOVERD GAS SURGE TANK

REFINED GAS

RECOVERD GAS COMPRESSOR

18

13 (13-a,13-b)

14 (14-a,14-b)

21  22

17-a  17-b  17-c

**NO.   GAS DESIGNATION**

① UNPROCESSED CRUDE GAS
② REFINED GAS (COMBUSTIBLE COMPONENT GAS)
③ DESORBED GAS
④ PRIMARY PRESSURIZED GAS (UNIFORMALIZATION)
⑤ SECONDARY PRESSURIZED GAS
⑥ SELF-DEPRESSURIZED GAS
⑦ DEPRESSURIZED BY SUCTION GAS
⑧ DESORBED BY SUCTION GAS (CARBON DIOXIDE GAS)
⑨ RECOVERED GAS
⑩ RINSING GAS
⑪ RECYCLE GAS

**MARK   PIPE LINE DESIGNATION**

a   UNPROCESSED CRUDE GAS FEEDING PIPE LINE
b   REFINED GAS PIPE LINE
c   PRESSURE UNIFORMALIZING UPPER PIPE LINE
d   PRESSURE UNIFORMALIZING LOWER PIPE LINE
e   SECONDARY PRESSURIZED GAS PIPE LINE
f   RECOVERED GAS PIPE LINE
g   DESORBED GAS DISCHARGING PIPE LINE
h   RINSING GAS PIPE LINE
i   RECYCLE GAS PIPE LINE

# FIG. 3

EP 0 394 947 A2

# FIG.4

| COLUMN A | COLUMN B | COLUMN C | COLUMN C | COLUMN C | COLUMN C | COLUMN D | COLUMN D |
|---|---|---|---|---|---|---|---|
| ADSORPTION PROCESS | SUPER-ADSORPTION PROCESS | PRESSURE UNIFORMALIZATION PROCESS | SELF-DEPRESSURIZATION PROCESS | DEPRESSION BY SUCTION PROCESS | DESORPTION BY SUCTION PROCESS | PRIMARY PRESSURIZATION PROCESS | SECONDARY PRESSURIZATION PROCESS |

COMPRESSOR
PRESSURE RISING PROCESS

WATER-SEALED GAS HOLDER
PRESSURE & CALORIE UNIFORMALIZING PROCESS

EP 0 394 947 A2